(19) Europäisches Patentamt
European Patent Office
Office européen des brevets

(11) Veröffentlichungsnummer : **0 036 838**
**B1**

(12) # EUROPÄISCHE PATENTSCHRIFT

(45) Veröffentlichungstag der Patentschrift : **26.09.84**

(51) Int. Cl.³ : **C 09 B 62/08**, D 06 P 3/66

(21) Anmeldenummer : **81810093.5**

(22) Anmeldetag : **13.03.81**

(54) **Azofarbstoffe, deren Herstellung und Verwendung.**

(30) Priorität : **18.03.80 CH 2125/80**

(43) Veröffentlichungstag der Anmeldung : **30.09.81 Patentblatt 81/39**

(45) Bekanntmachung des Hinweises auf die Patenterteilung : **26.09.84 Patentblatt 84/39**

(84) Benannte Vertragsstaaten :
**CH DE FR GB LI**

(56) Entgegenhaltungen :
**CH-A- 464 390**
**FR-A- 1 328 571**
**FR-A- 1 459 111**
**GB-A- 1 263 083**
**The Chemistry of Synthetic Dyes von VANKATARAMAN, Band VI, Seiten 131, 141, 142, 197 und 258**

(73) Patentinhaber : **CIBA-GEIGY AG**
**Postfach**
**CH-4002 Basel (CH)**

(72) Erfinder : **Hölzle, Gerd, Dr.**
**Spitzacker 9**
**CH-4410 Liestal (CH)**
Erfinder : **Begrich, Rainer, Dr.**
**Habsburgerstrasse 32**
**CH-4310 Rheinfelden (CH)**

**EP 0 036 838 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Azofarbstoffe der Formel

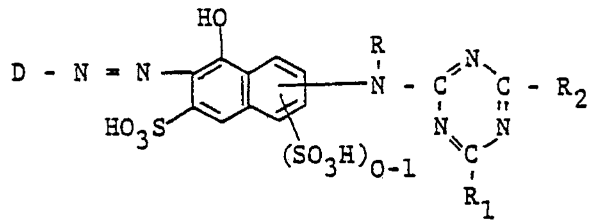

(1)

worin D der Rest einer aromatischen Diazokomponente, der weitersubstituiert sein kann, und selbst eine Azobrücke enthalten kann, und der eine Halogen-s-triazinylaminogruppe enthält, und R Wasserstoff oder Alkyl mit 1 bis 4 Kohlenstoffatomen ist, und $R_1$ und $R_2$ unabhängig voneinander nichtreaktive Substituenten sind.

Der Rest D ist ein aromatischer Rest, der selbst eine Azogruppe enthalten kann oder ein Rest der sich von einer Verbindung der Anthrachinon-, Nitroaryl-, Phthalocyanin-, Stilbenreihe oder dergl. herleitet. Insbesondere ist D ein Rest der Benzol- oder Naphthalinreihe.

Der Rest D kann die bei Azofarbstoffen üblichen Substituenten enthalten. Insbesondere enthält der Rest D Sulfonsäuregruppen. Der Rest D kann als weitere Substituenten ausser $SO_3H$ Gruppen z. B. die folgenden Enthalten : Alkylgruppen mit 1 bis 4 Kohlenstoffatomen, wie Methyl, Aethyl, Propyl, Isopropyl, Butyl, Isobutyl, sek-Butyl und tert.-Butyl, Alkoxygruppen mit 1 bis 4 Kohlenstoffatomen, wie Methoxy, Aethoxy, Propyloxy, Isopropylolxy, Butyloxy, Isobutyloxy, sek.-Butyloxy und tert.-Butyloxy, Phenoxy, Acylaminogruppen mit 1 bis 6 Kohlenstoffatomen, wie Acetylamino, Propionylamino und Benzoylamino, Aminogruppen, wie —$NH_2$, Methylamino, Aethylamino und Phenylamino ; Carbonsäureestergruppen, wie Methoxycarbonyl und Aethylcarbonyl, die Nitro-, Cyan-, Acetyl-, Carbamoyl-, Ureido-, Hydroxy- und Carboxygruppe und Halogen, wie Fluor, Chlor und Brom.

Falls der Rest D in o-Stellung zur Azogruppe komplexbildende Gruppen enthält, wie Hydroxy, Carboxy, Amino und Sulfo, kommen auch die Schwermetallkomplexe der Azofarbstoffe der Formel (1) in Betracht.

Als komplexbildende Schwermetalle kommen vorzugsweise Chrom, Kobalt, Nickel, Kupfer, Eisen und Mangan in Betracht.

Im Rest D ist eine Halogen-s-triazinylaminogruppe enthalten. Als solche kommen in Betracht : Dihalogen-s-triazinylgruppen, z. B. 2,4-Difluor-, 2,4-Dichlor- und 2,4-Dibrom-s-triazinyl-(6)-amino, und Monohalogen-s-triazinylgruppen, z. B. 4-Fluor-, 4-Chlor- und 4-Brom-s-triazinyl-(6)-amino, die in 2-Stellung substituiert sind durch einen Aryl- oder Alkylrest, z. B. einen Phenyl-, Methyl- oder Aethylrest, oder durch den Rest einer aliphatischen oder aromatischen, über das Schwefelatom gebundenen Mercapto- bzw. über das Sauerstoffatom gebundenen Hydroxylverbindung oder insbesondere durch eine —$NH_2$ Gruppe oder durch den Rest einer über das Stickstoffatom gebundenen aliphatischen, heterocyclischen oder aromatischen Aminoverbindung.

Die Aminogruppe, über welche der Halogen-s-triazinylrest an ein Kohlenstoffatomen in D gebunden ist, kann am Stickstoffatom substituiert sein, z. B. durch Alkyl, wie Methyl, Aethyl oder Sulfoäthyl. Die Halogen-s-triazinylaminogruppe kann direkt an ein aromatisches Kohlenstoffatom in D, oder über eine Alkylengruppe, z. B. eine Methylengruppe, an eine aromatisches Kohlenstoffatom in D gebunden sein.

Der Substituent R in Formel (1) kann Methyl, Aethyl, Propyl, Isopropyl, Butyl, Isobutyl, sek.-Butyl und tert.-Butyl sein. Vorzugsweise ist R Wasserstoff.

Als nichtreaktive Substituenten $R_1$ und $R_2$ kommen die gleichen Reste in Betracht, die oben als in 2-Stellung befindlichen Substituenten von Monohalogen-s-triazinylresten in D genannt sind, also Aryl- und Alkylreste, wie Phenyl, Methyl und Aethyl, oder Reste von aliphatischen oder aromatischen, über das Schwefelatom gebundene Mercapto- bzw. über das Sauerstoffatom gebundene Hydroxylverbindungen, oder insbesondere die —$NH_2$ Gruppe oder Reste von über das Stickstoffatom gebundenen aliphatischen, aromatischen oder heterocyclischen Aminoverbindungen.

Bevorzugt sind Azofarbstoffe der Formel

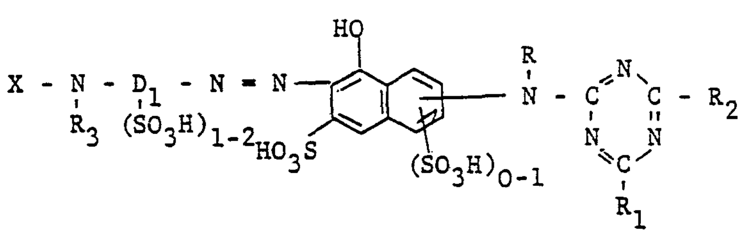

(2)

worin $D_1$ ein Benzol- oder Naphthalinrest, der weitersubstituiert sein kann, X eine Fluor- oder Chlor-s-triazinylgruppe, $R_3$ Wasserstoff oder Alkyl mit 1 bis 4 Kohlenstoffatomen, und R Wasserstoff oder Alkyl mit 1 bis 4 Kohlenstoffatomen ist, und $R_1$ und $R_2$ unabhängig voneinander nichtreaktive Substituenten sind.

Der Benzol- oder Naphthalinrest $D_1$ kann weitersubstituiert sein, z. B. durch die oben genannten Substituenten, die D in Formel (1) aufweisen kann.

Bevorzugt sind insbesondere Azofarbstoffe der Formel (2), worin X eine Monofluor- oder Monochlor-s-triazinylgruppe, $R_3$ Wasserstoff oder Methyl und R Wasserstoff oder Methyl ist, und $R_1$ und $R_2$ unabhängig voneinander unsubstituierte oder substituierte Hydroxy- oder Aminogruppen sind.

Bevorzugt sind ferner Azofarbstoffe der Formel

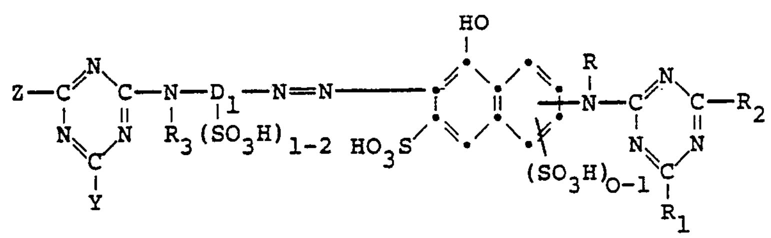

(3)

worin $D_1$ ein Sulfobenzolrest, ein Sulfobenzol $-CH_2-$ Rest, der durch Methoxy substituiert sein kann, oder ein Sulfonaphthalin $-CH_2-$ Rest, Y Fluor oder Chlor, Z Amino, $C_{1-4}$-Alkylamino oder N,N-Di-$C_{1-4}$-Alkylamino, worin die Alkyle durch Hydroxy oder Sulfo substituiert sein können, Cyclohexylamino, Phenylamino, das im Phenylkern durch Methyl, Methoxy, Aethoxy, Chlor, Carboxy, Sulfo, β-Sulfatoäthylsulfonyl, Acetylamino, Oxaloamino oder Ureido substituiert sein kann, Morpholino, Benzthiazolyl-2-amino, Thiazolyl-2-amino, 4-Methyl-5-Sulfobenzthiazolyl-2-phenylamino, N-$C_{1-2}$-Alkyl-N-phenylamino, das im Alkyl durch Hydroxy substituiert sein kann, $C_{1-4}$-Alkoxy oder $C_{1-2}$-Alkoxy-$C_{1-2}$-alkoxy, $R_3$ Wasserstoff oder Methyl, R Wasserstoff oder Methyl, und $R_1$ und $R_2$ unabhängig voneinander Hydroxy, Methoxy, Isopropyloxy, Phenoxy, Amino, β-Hydroxyäthylamino, N,N-Di-β-hydroxyäthylamino, β-Sulfoäthylamino, β-Carboxyäthylamino, N-Methyl-N-β-sulfoäthylamino, Phenylamino, Sulfophenylamino, Carboxyphenylamino, Sulfo-carboxyphenylamino, N-Methyl-N-phenylamino oder Morpholino ist.

Eine wichtige Untergruppe der Azofarbstoffe der Formel (3) sind die Azofarbstoffe der Formel

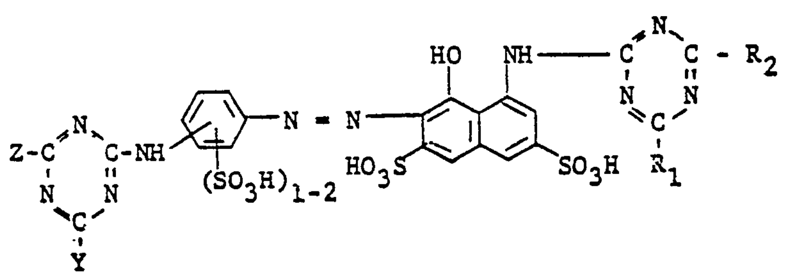

(4)

worin Y, Z, $R_1$ und $R_2$ die unter Formel (3) angegebenen Bedeutungen haben.

Unter den Azofarbstoffen der Formel (4) sind von besonderer Bedeutung die Azofarbstoffe der Formel

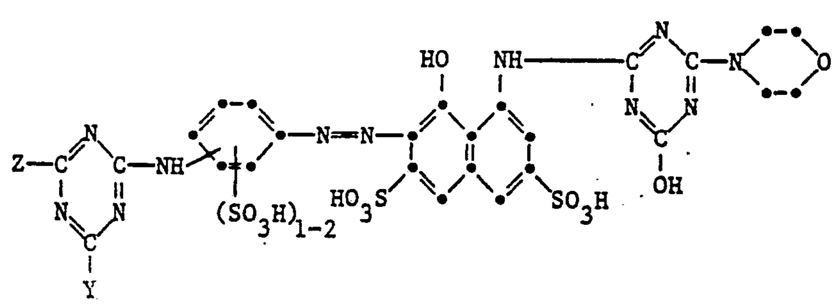

(5)

worin Y und Z die unter Formel (4) angegebenen Bedeutungen haben. Vorzugsweise ist Y in Formel (5) Fluor.

Wertvolle Farbstoffe der durch Formel (5) definierten Struktur sind die Farbstoffe der Formeln

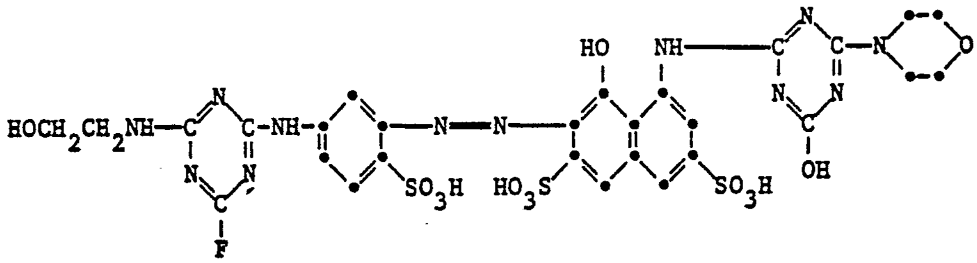

(6)

und

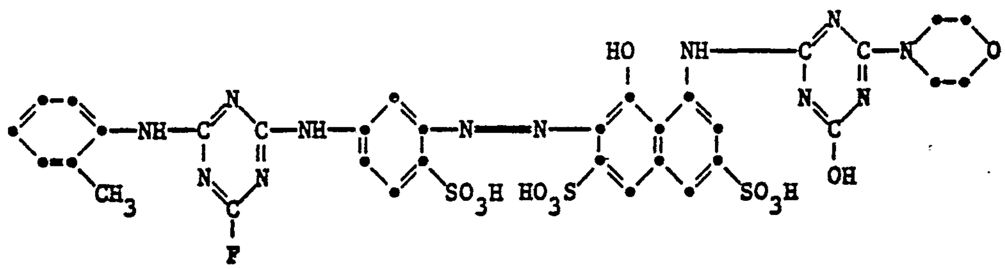

(6a)

Da die Azofarbstoffe der Formel (1) eine Halogen-s-triazinylaminogruppe im Rest D enthalten, sind sie reaktiv.

Unter (faser) reaktiven Resten sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Azofarbstoffe der Formel (1) ist dadurch gekennzeichnet, dass man eine diazotierte Diazokomponente der Formel

$$D{-}NH_2 \qquad (7)$$

eine Kupplungskomponente der Formel

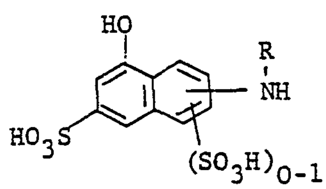

(8)

ein Trihalogen-s-triazin der Formel

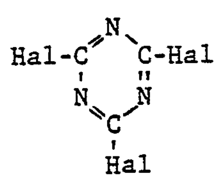

(9)

und Verbindungen der Formeln

$$R_1{-}H \qquad (10)$$

und

$$R_2{-}H \qquad (11)$$

miteinander kuppelt und kondensiert, und in den Rest D, der noch eine acylierbare Aminogruppe enthalten muss, einen Halogen-s-triazinrest einführt.

Falls der Rest D der Diazokomponente der Formel (7) in ortho-Stellung zur —$NH_2$ Gruppe eine komplexbildende Gruppe enthält, können die erhaltenen Azofarbstoffe mit schwermetallabgebenden Mitteln umgesetzt werden.

Vorzugsweise verwendet man als Diazokomponenten der Formel (7) Diazokomponenten der Benzol- oder Naphthalinreihe.

Da die einzelnen oben gekennzeichneten Verfahrensschritte, nämlich Kupplung und mehrfache Kondensation in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten der Formeln (7) bis (11) und dem Halogen-s-triazin, das in den Rest D eingeführt wird, frei gewählt werden kann.

Die wichtigsten Verfahrensvarianten sind dadurch gekennzeichnet,

1. dass man eine Kupplungskomponente der Formel (8) mit einem Trihalogen-s-triazin der Formel (9) kondensiert, das erhaltene primäre Kondensationsprodukt mit einer diazotierten Diazokomponente der Formel (7) kuppelt, die Monoazoverbindung mit Verbindungen der Formeln (10) und (11) kondensiert und das erhaltene Kondensationsprodukt mit einem Di- oder Trihalogen-s-triazin kondensiert und gegebenenfalls nachträglich ein Halogenatom des Triazins durch Kondensation mit einer Verbindung, die leicht abspaltbaren Wasserstoff enthält, durch einen nichtreaktiven Substituenten ersetzt ;

2. dass man eine Verbindung, die leicht abspaltbaren Wasserstoff enthält, ein Trihalogen-s-triazin und eine Diazokomponente der Formel (7) kondensiert, das sekundäre Kondensationsprodukt diazotiert und auf das tertiäre Kondensationsprodukt aus einer Kupplungskomponente der Formel (8), einem Triahalogen-s-triazin der Formel (9) und Verbindungen der Formeln (10) und (11) kuppelt ;

3. dass man eine Kupplungskomponente der Formel (8) mit einem Trihalogen-s-triazin der Formel (9) kondensiert, das primäre Kondensationsprodukt mit Verbindungen der Formeln (10) und (11) kondensiert, das erhaltene Kondensationsprodukt mit einer diazotierten Diazokomponente der Formel (7) kuppelt und die Monoazoverbindung mit einem Dihalogen-s-triazin oder einem Trihalogen-s-triazin kondensiert und gegebenenfalls ein Halogenatom des Triazins durch Kondensation mit einer Verbindung, die leicht abspaltbaren Wasserstoff enthält, durch einen nichtreaktiven Substituenten ersetzt.

Falls die in den Rest der Diazokomponente einzuführende Halogen-s-triazinylgruppe eine Fluor-s-triazinylgruppe sein soll, ist es vorteilhaft, zunächst wie oben zu verfahren, dann die Monoazoverbindung zu isolieren, erneut in einer wässerigen alkalischen Lösung, z. B. einer Natriumhydroxid-, Kaliumhydroxid-, Lithiumhydroxid-, Ammoniumhydroxid- oder Natriumcarbonatlösung, aufzulösen und dann mit Cyanurfluorid umzusetzen und gegebenenfalls anschliessend ein Fluoratom am Triazinrest durch Kondensation mit einer Verbindung, die leicht abspaltbaren Wasserstoff enthält, durch einen nichtreaktiven Substituenten zu ersetzen.

Als Verbindungen, die leicht abspaltbaren Wasserstoff enthalten, kommen vor allem Hydroxy-, Mercapto- und Aminoverbindungen in Betracht.

Das bevorzugte Verfahren zur Herstellung der Verbindungen der oben angegebenen Formeln (6) und (6a) ist dadurch gekennzeichnet, dass man 1-Amino-8-hydroxynaphthalin-3,6-disulfonsäure mit Cyanurchlorid kondensiert, das primäre Kondensationsprodukt mit Morpholin kondensiert, das sekundäre Kondensationsprodukt mit diazotierter 1-Amino-3-acetylamino-benzol-6-sulfonsäure kuppelt, das verbliebene Chloratom am Triazin durch Hydrolyse gegen eine Hydroxygruppe austauscht, die Acetylgruppe durch Verseifung abspaltet und die erhaltene Aminoverbindung mit Cyanurfluorid und zuletzt mit Aethanolamin bzw. o-Toluidin kondensiert.

Gemäss dem oben beschriebenen Herstellungsverfahren können die Azofarbstoffe der Formel (1) in der Weise hergestellt werden, dass man Diazo- bzw. Kupplungskomponenten verwendet, die bereits Reaktivreste enthalten.

Es ist in vielen Fällen aber auch möglich, Reaktivreste nachträglich in die Azofarbstoffe der Formel (1) einzuführen. Die Einführung kann nach der Kupplung oder gegebenenfalls nach der Metallisierung geschehen. Die Einführung des Reaktivrestes erfolgt durch Acylierung der Diazokomponenten, die ausser der zu diazotierenden Aminogruppe noch eine weitere acylierbare Aminogruppe oder eine Gruppe, die z. B. durch Reduktion oder Verseifung in eine acylierbare Aminogruppe überführbar ist, wie die Nitrogruppe oder die Acetylaminogruppe, enthalten, bzw. bei nachträglicher Einführung der entsprechenden Aminoazofarbstoffe, die eine acylierbare Aminogruppe enthalten.

Nach einem weiteren Verfahren erhält man die Azofarbstoffe der Formel (1) auch dadurch, dass man die Kupplung unter Verwendung einer Kupplungskomponente der Formel (8) ausführt, und die kondensierbare —N(R)H Gruppe in der Kupplungskomponente mit einer Verbindung der Formel

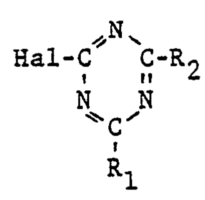

(12)

kondensiert.

In den nachfolgenden Beispielen ist die Herstellung der Zwischenprodukte nicht in allen Fällen beschrieben, sie ergibt sich jedoch ohne weiteres aus dem oben Gesagten.

Als Ausgangsstoffe, die zur Herstellung der Azofarbstoffe der Formel (1) verwendet werden können, seien genannt:

Diazokomponenten der Formel (7)

1,3-Diaminobenzol-4-sulfonsäure,
1,3-Diaminobenzol-4,6-disulfonsäure,
1,4-Diaminobenzol-2-sulfonsäure,
1,4-Diaminobenzol-2,5- oder -2,6-disulfonsäure,
1,4-Diamino-2-chlorbenzol-5-sulfonsäure,
1,4-Diamino-2-methylbenzol-5-sulfonsäure,
1,3-Diamino-4-methylbenzol-6-sulfonsäure,
bzw. deren Monoacetylderivate,
3-(3'- bzw. 4'-Aminobenzoylamino)-1-aminobenzol-6-sulfonsäure,
1-(4'-Aminobenzoylamino)-4-aminobenzol-2,5-disulfonsäure,
4-Nitro-2-aminophenol-6-sulfonsäure,
2,6-Diaminonaphthalin-4,8-disulfonsäure,
1-Amino-4-methoxy-5-aminomethyl-benzol-6-sulfonsäure,
2-Amino-5-aminomethyl-naphthalin-1-sulfonsäure,
4-Amino-4'-acetylamino-azo-benzol-3-sulfonsäure,
4-Amino-4'-nitrostrilben-2,2'-disulfonsäure,
1-Amino-3-N-methylaminomethyl-benzol-6-sulfonsäure.

Kupplungskomponenten der Formel (8)

1-Amino-8-naphthol-3,6-disulfonsäure,
1-Amino-8-naphthol-4,6-disulfonsäure,
2-Amino-5-naphthol-7-sulfonsäure,
1-Amino-8-naphthol-2,4-disulfonsäure,
1-Amino-8-naphthol-4-sulfonsäure,
2-Amino-8-naphthol-6-sulfonsäure,
2-Amino-6-naphthol-8-sulfonsäure,
1-Amino-5-naphthol-7-sulfonsäure,
2-Amino-8-naphthol-3,6-disulfonsäure,
2-Amino-5-naphthol-7,1-disulfonsäure,
2-N-Methylamino-5-naphthol-7-sulfonsäure,
2-N-Methylamino-8-naphthol-6-sulfonsäure.

Trihalogen-s-triazine der Formel (9)

Cyanurfluorid, -chlorid und -bromid.

Verbindungen der Formeln (10) und (11)

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, N-β-Hydroxyäthylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitro-anilin, 2-Nitro-4-methyl-anilin, 3-Nitro-4-methylanilin, o-, m- und p-Anisidin, o-, m- und p-Phenetidin, Naphthylamin-(1), Naphthylamin-(2), 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin, Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-, und -4,6,8-trisulfonsäure, 2-Naphthylamin-1,3,7-, -1,5,7-, -3,5,7-, -3,6,7-, -3,6,8- und -4,6,8-trisulfonsäure, -2-, 3- und 4-Aminopyridin, 2-Aminobenzthiazol, 5-, 6- und 8-Aminochinolin, 2-Aminopyrimidin, Morpholin, Piperidin, Piperazin, Wasser,

Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxypropanol, γ-Aethoxypropanol, β-Aethoxy-β-äthoxyäthanol, Glycolsäure, Phenol, o-, m- und p-Chlorphenol, o-, m- und p-Nitrophenol, o-, m- und p-Hydroxybenzoesäure, o-, m- und p-Phenolsulfonsäure, Phenol-2,4-disulfonsäure, α-Naphthol, β-Naphthol, 1-Hydroxynaphthalin-8-sulfonsäure, 2-Hydroxynaphthalin-1-sulfonsäure, 1-Hydroxynaphthalin-5-sulfonsäure, 1-Hydroxynaphthalin-4-sulfonsäure, 1-Hydroxynaphthalin-6- oder -7-sulfonsäure, 2-Hydroxynaphthalin-6-, -7- oder -8-sulfonsäure, 2-Hydroxynaphthalin-4-sulfonsäure, 2-Hydroxynaphthalin-4,8- oder -6,8-disulfonsäure, 1-Hydroxynaphthalin-4,8-disulfonsäure, 2-Hydroxynaphthalin-3,6-disulfonsäure, Methanthiol, Aethanthiol, Propanthiol, Isopropanthiol, n-Butanthiol, Thioglykolsäure, Thiophenol, α-Thionaphthol, β-Thionaphthol.

Als Acylierungsmittel, die verwendet werden können, um einen Halogen-s-triazinrest in den Rest D einzuführen, kommen die folgenden Verbindungen in Betracht : 2,4,6-Trichlor-(-Tribrom- oder -Trifluor)-s-triazin, sowie 4,6-Dichlor- (-Dibrom- oder -Difluor)-s-triazine, die in 2-Stellung substituiert sind durch einen Aryl- oder Alkylrest, z. B. einen Phenyl-, Methyl- oder Aethylrest, oder durch den Rest einer aliphatischen oder aromatischen, über das Schwefelatom gebundenen Mercapto- bzw. über das Sauerstoffatom gebundenen Hydroxylverbindung oder insbesondere durch eine —$NH_2$ Gruppe oder durch den Rest einer über das Stickstoffatom gebundenen aliphatischen, heterocyclischen oder aromatischen Aminoverbindung.

Die in 2-Stellung substituierten 4,6-Dihalogen-s-triazine werden z. B. durch Umsetzung von Trihalogen-s-triazinen mit den oben erwähnten Amino-, Hydroxy- oder Mercaptoverbindungen erhalten.

Die Einführung des in 2-Stellung des Triazinrestes stehenden Substituenten kann auch nach der Kupplung oder nach der Metallisierung geschehen. Man kann somit z. B. eine der oben genannten Amino-, Hydroxy- oder Mercaptoverbindungen nachträglich mit einem bereits an den Azofarbstoff der Formel (1) gebundenen Dihalogen-s-triazinrest kondensieren. Diese Möglichkeit ist auch bei dem weiter vorn beschriebenen Verfahren zur Herstellung der Azofarbstoffe der Formel (1) u. a. in Betracht zu ziehen.

Unter den weiter vorn erwähnten Verbindungen, die leicht abspaltbaren Wasserstoff enthalten, sind insbesondere Verbindungen, die ein über ein Heteroatom gebundenes reaktionsfähiges Wasserstoffatom enthalten, zu verstehen. Als solche kommen vor allem die oben aufgeführten Amino-, Hydroxy- und Mercaptoverbindungen in Frage.

Als Aminoazofarbstoffe in die nach der Kupplung die Reaktivreste eingeführt werden können, kommen z. B. die Kupplungsprodukte der oben genannten Diazokomponenten der Formel (7) mit Kupplungskomponenten der Formel (8) in Betracht.

Von Bedeutung sind ferner Azofarbstoffe der Formel (1), die einen über eine Aminogruppe gebundenen Monohalogentriazinrest aufweisen, der ausser dem Halogenatom eine Aminogruppe an den Triazinring gebunden enthält, und wobei an diese Aminogruppe ein weiterer Reaktivrest, insbesondere ein Halogentriazinrest, gebunden ist. Wenn der zweite, zusätzliche Reaktivrest ein Halogentriazinrest ist, so ist er vorzugsweise über den Rest eines Alkylendiamins oder Arylendiamins an den ersten Triazinrest gebunden. Die Monohalogentriazinrest ausser dem Halogenatom vorhandenen faserreaktive Aminogruppe hat somit vorzugsweise die Struktur

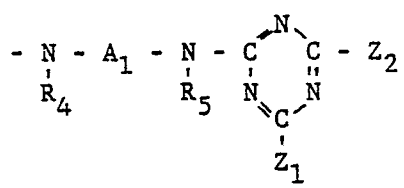

(13)

worin $R_4$ und $R_5$ ein Wasserstoffatom oder Alkyl mit 1 bis 4 Kohlenstoffatomen, $A_1$ einen Alkylen- oder Arylenrest, $Z_1$ ein Halogenatom, z. B. ein Fluor-, Chlor- oder Bromatom, und $Z_2$ ein Halogenatom, eine Amino-, Alkoxy-, Aryloxy-, Alkylthio- oder Arylthiogruppe bedeuten. $A_1$ kann ein Alkylenrest mit kürzerer oder längerer Kette sein, z. B. ein Aethylen- oder hexylenrest, vorzugsweise ist $A_1$ jedoch ein Benzolrest, z. B. ein m- oder p-Phenylenrest, insbesondere ein Phenylensulfonsäurerest. Als Amino-, Alkoxy-, Aryloxy-, Alkylthio- oder Arylthiogruppe für $Z_2$ kommt z. B. der Rest einer der oben aufgeführten Amino-, Hydroxy- und Mercaptoverbindungen in Betracht.

In einer besonderen Ausführungsform ist $Z_2$ in Formel (13) gleich dem chromogenen Rest des Azofarbstoffes der Formel (1).

Die Kondensation von 2,4,6-Trihalogen-s-triazinen mit Diazokomponenten und Kupplungskomponenten und mit Amino-, Hydroxy- und Mercaptoverbindungen erfolgen vorzugsweise in wässriger Lösung oder Suspension, bei niedriger Temperatur und bei saurem, neutralem bis schwach alkalischen pH-Wert, und so dass im fertigen Azofarbstoff der Formel (1) noch ein Halogenatom am Triazinring, der im Rest D enthalten ist, als abspaltbarer Rest übrigbleibt. Vorteilhaft wird der bei der Kondensation freiwerdende Halogenwasserstoff laufend durch Zugabe wässriger Alkalihydroxyde, -carbonate oder -bicarbonate neutralisiert.

Die Kondensationen erfolgen z. B. mit Cyanurhalogeniden, wie Cyanurchlorid, bei ungefähr 0 bis

10 °C in saurem bis neutralem Medium, mit den 1,3,5-Triazin-dihalogeniden bei etwa 10 bis 50 °C und den 1,3,5-Triazin-monohalogeniden bei 70 bis 100 °C in neutralem Medium. Man arbeitet je nach Reaktionsfähigkeit der Komponenten bei möglichst tiefen Temperaturen von beispielsweise 0 bis 60 °C und bei pH-Werten der wässrigen Lösung von 1 bis höchstens 9 in Gegenwart von Puffersalzen, wie Alkalisalzen mehrwertiger anorganischer Säuren oder organischer Säuren als mineralsäurebindende Mittel, beispielsweise unter Verwendung der Natriumsalze der Phosphorsäuren, der Kohlensäure oder der Essigsäure.

Die Kupplungskomponenten, welche die definitionsgemässen s-Triazinylaminogruppen mit den nichtreaktiven Substituenten $R_1$ und $R_2$ enthalten, erhält man beispielsweise durch stufenweise Umsetzung von 1 Mol Cyanurchlorid mit 1 Mol der entsprechenden, eine —N(R)H Gruppe enthaltenden Kupplungskomponente und mit je 1 Mol einer Verbindung der Formel (10) bzw. (11).

Die Diazotierung der Diazokomponenten der Formel (7) erfolgt in der Regel durch Einwirkung salpetriger Säure in wässrigmineralsaurer Lösung bei tiefer Temperatur, die Kupplung auf die Kupplungskomponenten der Formel (8) bei schwach sauren, neutralen bis schwach alkalischen pH-Werten.

Falls der Rest D in Formel (1) in ortho-Stellung zur Azogruppe eine komplexbildende Gruppe, z. B. eine Hydroxy- oder Carboxygruppe oder eine Alkoxygruppe, wie eine Methoxygruppe, aufweist, so können die erhaltenen Azofarbstoffe (gegebenenfalls vor deren Umwandlung in Reaktivfarbstoffe oder nachher) in ihre Schwermetallkomplexverbindungen, z. B. in die Kupfer-, Chrom-, Nickel- oder Kobaltkomplexverbindungen umgewandelt werden. Die Umsetzung mit dem schwermetallabgebenden Mittel erfolgt somit in irgend einer geeigneten Stufe der Reaktionsfolge, z. B. vor oder nach der Umsetzung mit Verbindungen der Formeln (10) und (11).

Zu diesem Zweck verwendet man als metallabgebende Mittel z. B. Salze, welche die genannten Metalle als Kation enthalten, wie z. B. Chromsulfate, Kobaltacetate, Kobaltsulfat, Kupfersulfat, Kupferacetat. In manchen Fällen ist die Verwendung komplexer Metallverbindungen von Vorteil, z. B. in Form von Metall-Ammin-Komplexen, wie Kupferamminsulfate, aus Kupfersulfat und Ammoniak, Pyridin oder Monoäthanolamin, oder in Form von Verbindungen, welche eines der genannten Metalle im Anion komplex gebunden enthalten, z. B. komplexer Chromverbindungen organischer Hydroxycarbonsäuren, wie Salicylsäure oder komplexer Kobalt- oder Kupferverbindungen der Alkalisalze aliphatischer Aminocarbonsäuren oder Hydroxycarbonsäuren, wie des Glykokolls, der Milchsäure und vor allem der Weinsäure, wie Natriumkupfertartrat.

Die Behandlung mit den metallabgebenden Mitteln kann nach an sich bekannten Methoden erfolgen, z. B. bei Raumtemperatur oder bei mässig erhöhter Temperatur, falls leicht metallisierbare Ausgangsfarbstoffe vorliegen, oder, wenn gleichzeitig mit der Metallisierung eine Entalkylierung stattfinden muss, durch Erwärmung auf Temperaturen zwischen 50 und 120 °C im offenen Gefäss, z. B. unter Rückflusskühlung oder gegebenenfalls im geschlossenen Gefäss unter Druck, wobei die pH-Verhältnisse durch die Art des gewählten Metallisierungsverfahrens gegeben sind ; z. B. eine saure Kupferung mit Kupfersulfat, eine alkalische Kupferung mit Kupfertetraminsulfat. Gewünschtenfalls können bei der Metallisierung auch Lösungsmittel, wie z. B. Alkohol, Dimethylformamid usw., zugesetzt werden.

Die erhältlichen Metallkomplexverbindungen können auf ein oder zwei Azofarbstoffmoleküle ein Atom Metall in komplexer Bindung enthalten. Bei Verwendung von Kupfer- und Nickelverbindungen als metallabgebende Mittel entstehen z. B. vorzugsweise Verbindungen, die auf ein Azofarbstoffmolekül ein Atom Metall enthalten, während bei Verwendung von Chrom und vor allem bei Verwendung von Kobalt die 1 : 2-Typen leicht zugänglich und besonders wertvoll sind.

Anstatt von o,o'-Dihydroxyazofarbstoffen auszugehen, kann man auch die entsprechenden o-Alkoxy-o'-hydroxyazofarbstoffe als Ausgangsstoffe verwenden ; dabei wird die Alkylgruppe des o-Alkoxyrestes während der Metallisierung abgespalten und man erhält die gleichen Metallkomplexe wie aus den o,o'-Dihydroxyfarbstoffen.

Die Azofarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden ; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d. h. ohne Zwischenisolierung der Farbstoffe herstellen.

Die Azofarbstoffe der Formel (1) und deren Schwermetallkomplexe sind neu ; sie eignen sich zum Färben und Bedrucken verschiedenster Materialien, wie z. B. Seide, Leder, Wolle, synthetischer Fasern aus Superpolyamiden, Superpolyurethanen, polyhydroxylierter Materialien, wie z. B. cellulosehaltiger Materialien faseriger Struktur, wie Leinen, Zellstoff, regenerierte Cellulose, Baumwolle und dergl.

Die Azofarbstoffe der Formel (1) werden für das Färben von stickstoffhaltigen Fasern, wie z. B. von Superpolyamiden, Superpolyurethanen, Seide, Leder und insbesondere Wolle, z. B. aus schwach saurem, neutralem oder schwach alkalischem Bade, gegebenenfalls unter Zusatz der üblichen Hilfsmittel, z. B. von Aethylenoxydkondensationsprodukten hochmolekularer Amine, und vor allem von Cellulosematerialien, insbesondere Baumwolle, z. B. nach dem Ausziehverfahren aus langer Flotte, aus alkalischem, gegebenenfalls stark salzhaltigem wässrigen Bade und insbesondere nach dem Foulardfärbeverfahren,

wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden, verwendet.

Die Reaktivfarbstoffe eignen sich auch zum Druck, insbesondere auch Baumwolle, ebenso aber auch zum Bedrucken von stickstoffhaltigen Fasern, z. B. von Wolle, Seide oder Wolle enthaltenden Mischgeweben.

Die Färbungen und Drucke zeichnen sich durch interessante und wertvolle, sehr reine und brillante Nuancen aus. Die Färbungen und Drucke zeigen eine gute Säure- und Alkalibeständigkeit sowie eine gute Beständigkeit gegenüber Kunstharzausrüstungsmitteln, eine gute Lichtechtheit und, insbesondere auf Baumwolle, eine hervorragende Nassechtheit. Erwähnenswert ist ferner der hohe Fixierungsgrad und die gute Entfernbarkeit nicht fixierter Farbstoffanteile.

Zwecks Verbesserung der Nassechtheiten empfiehlt es sich, die erhaltenen Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Aus der GB-A-1.263.083 sind Reaktivfarbstoffe bekannt, die ähnliche Chromophore, jedoch zwei faserreaktive Chlortriazinreste anstelle von nur einem, wie in den Farbstoffen der vorliegenden Anmeldung, enthalten.

In der FR-A-1.459.111 sind Reaktivfarbstoffe beschrieben, welche einen nichtreaktiven Triazinrest enthalten, der als Brückenglied einen organischen Farbstoffrest mit einem Azofarbstoffrest verbindet.

In den nachfolgenden Beispielen bedeuten die Teile, sofern nicht anderes angegeben wird, Gewichtsteile, die Prozente Gewichtsprozente und die Temperaturen sind in Celsiusgraden angegeben. Zwischen Gewichts- und Volumteilen besteht das gleiche Verhältnis wie zwischen Gramm und Kubikzentimeter.

## Beispiel 1

31,9 Teile H-Säure werden in 100 Teilen Wasser angerührt und mit Natriumhydroxyd neutralisiert. Diese Lösung wird zu einer Suspension zugetropft, bestehend aus 18,5 Teilen fein gemahlenem Cyanurchlorid in 70 Teilen Wasser und 70 Teilen Eis. Das Reaktionsgemisch wird 1 bis 2 Stunden gerührt und durch Eiszugabe bei 0 bis 5 °C gehalten bis eine klare Lösung entstanden ist.

21,8 Teile 3-Aminoacetanilid-4-sulfosäure werden auf übliche Weise diazotiert und mit der cyanurierten H-Säure gekuppelt. Dabei wird das Kupplungsgemisch innert 2 Stunden mit Natriumhydroxydlösung neutralisiert und die Temperatur auf 20 bis 25 °C erhöht.

Zur entstandenen Suspension des Monoazofarbstoffes werden 8,3 Teile Morpholin zugetropft. Durch Zugabe von Natriumhydroxydlösung wird auf pH 7,5 gestellt, die Temperatur auf 35 bis 40 °C erhöht und 1 Stunde gerührt. Es entsteht eine klare Lösung.

Das am Triazinring noch verbliebene Chlor wird durch zweistündiges Rühren bei 95 bis 100 °C nach Zugabe von 20 Vol. Teilen konz. Natriumhydroxydlösung abgespalten.

Zur Verseifung der Acetylgruppe werden 30 Teile Natriumhydroxyd (5 % des Volumens) zugegeben und 4 Stunden bei 95 bis 100 °C gerührt.

Die Reaktionslösung wird mit konz. Salzsäure neutralisiert, der Farbstoff mit Kochsalz ausgefällt, filtriert und getrocknet. Er entspricht der Formel

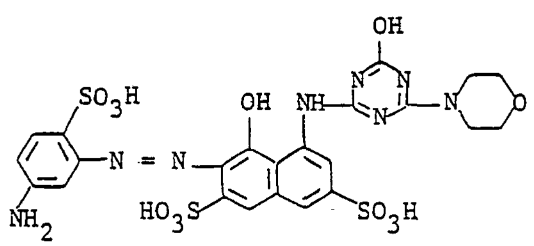

(I)

Mol 698

Wird das am Triazinring verbliebene Chlor durch Diäthanolamin ersetzt, erhält man die Verbindung mit der Formel

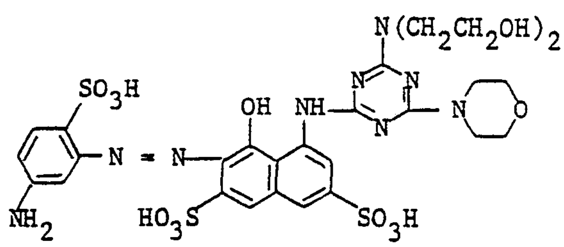

(II)

Mol 785

Beispiel 2

In 200 Teilen Wasser und 100 Teilen Eis werden 13,2 Teile Aminodifluortriazin fein suspendiert. Dazu gibt man eine neutrale Lösung von 69,8 Teilen des in Beispiel 1 erhaltenen Farbstoffs I in 1 000 Teilen Wasser. Die Acylierung erfolgt beim zweistündigen Rühren bei 15 bis 20 °C. Durch Zutropfen von verdünnter Natriumhydroxydlösung wird die Reaktion bei pH 7 gehalten. Der entstandene Reaktivfarbstoff wird mit Kochsalz ausgefällt, abfiltriert und getrocknet.

Er färbt Cellulosefasern nach dem in Färbevorschrift I angegebenen Verfahren in brillanten roten Tönen mit guten Echtheiten. Die Färbungen sind gut weiss ätzbar.

Beispiel 3

Verwendet man statt des in Beispiel 2 eingesetzten Aminodifluortriazins eine entsprechende Menge des primären Kondensationsproduktes aus Cyanurchlorid und Anilin-2,5-disulfonsäure, so erhält man einen Farbstoff, der Cellulosefasern nach dem in Färbevorschrift II angegebenen Druckverfahren in roten Tönen mit guten Echtheiten färbt. Der sehr gute Druckausfall auf Regeneratcellulose ist besonders bemerkenswert.

Beispiel 4

46 Teile des sekundären Kondensationsproduktes aus 1 Mol 2-Aminobenzolsulfonsäure, 1 Mol Trifluortriazin und 1 Mol 1,3-Diaminobenzol-4-sulfonsäure werden in üblicher Weise diazotiert. Die Diazosuspension wird zu einer auf 0 °C gekühlten Lösung des Natriumsalzes von 66 Teilen des tertiären Kondensationsproduktes aus 1 Mol Cyanurchlorid, 1 Mol 1-Amino-8-hydroxynaphthalin-3,6-disulfonsäure, 1 Mol 1-Aminobenzol-3-sulfonsäure und 1 Mol Aminobenzol in 600 Teilen Wasser und 40 Teilen Natriumcarbonat gegeben. Nach beendigter Kupplung wird der Farbstoff durch Zugabe von Natriumchlorid ausgefällt, abfiltriert und getrocknet.

Der neue Farbstoff hat folgende Konstitution :

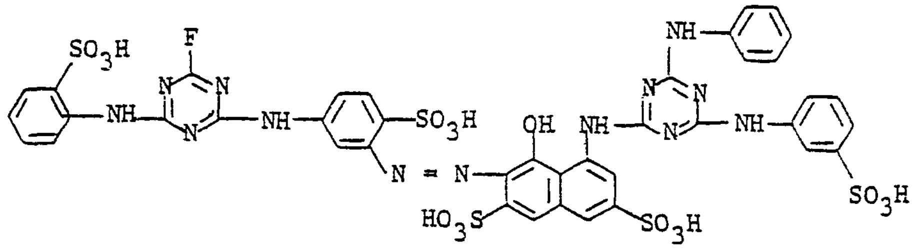

Er färbt Cellulosefasern nach dem in Färbevorschrift I angegebenen Verfahren in brillanten Rottönen mit guten Echtheiten. Die gefärbten Stoffe sind weiss ätzbar.

Verwendet man in den Beispielen 1 bis 4 statt der H-Säure als Kupplungskomponente die 1-Amino-8-hydroxynaphthalin-4,6-disulfonsäure (K-Säure), 2-Amino-5-hydroxynaphthalin-7-sulfonsäure (J-Säure), 2-N-Methylamino-5-hydroxynaphthalin-7-sulfonsäure oder 2-Amino-8-hydroxynaphthalin-6-sulfonsäure (γ-Säure), so erhält man ebenfalls Reaktivfarbstoffe, die Cellulosefasern nach den in den Färbevorschriften I und II angegebenen Verfahren in roten Tönen mit guten Echtheiten färben.

In der folgenden Tabelle sind weitere, nach den Beispielen 1 bis 4 herstellbare Farbstoffe mit ähnlich guten Eigenschaften aufgeführt, welche der allgemeinen Formel

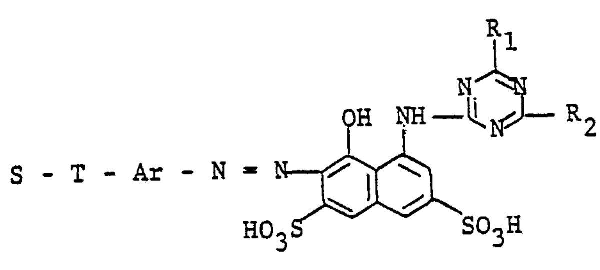

entsprechen. Alle Farbstoffe der folgenden Tabelle färben Baumwolle in roten Tönen.

(Siehe Tabellen Seite 11 ff.)

Tabelle

| Nr. | S | T | Ar | $R_1$ | $R_2$ |
|---|---|---|---|---|---|
| 1 | 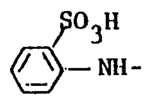 | 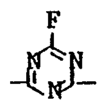 | 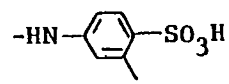 | 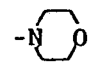 | $-N(CH_2CH_2OH)_2$ |
| 2 | " | " | " | $-N(CH_2CH_2OH)_2$ | " |
| 3 | " | " | " | $-OH$ | " |
| 4 | " | " | " | $-NH_2$ | " |
| 5 | " | " | " | $-OCH_3$ | " |
| 6 | " | " | " | 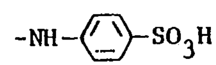 | " |
| 7 | " | " | " | 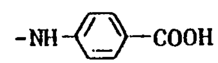 | " |
| 8 | " | " | " | $-NHCH_2CH_2OH$ | " |
| 9 | " | " | " | $-NHCH_2CH_2SO_3H$ | " |

(Fortsetzung)

| Nr. | S | T | Ar | $R_1$ | $R_2$ |
|---|---|---|---|---|---|
| 10 | 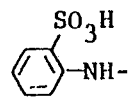 | 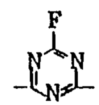 | 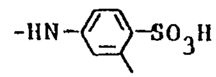 | 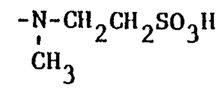 | $-N(CH_2CH_2OH)_2$ |
| 11 | " | " | " | $-NHCH_2CH_2COOH$ | " |
| 12 | " | " | " | " | 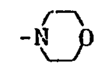 |
| 13 | " | " | " | 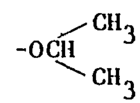 | " |
| 14 | " | " | " | 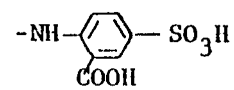 | " |
| 15 | " | " | " | $-NHCH_2CH_2SO_3H$ | " |
| 16 | 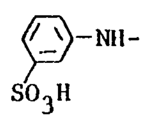 | 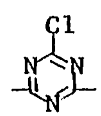 | 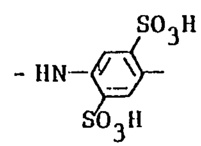 | $-N(CH_2CH_2OH)_2$ | $-N(CH_2CH_2OH)_2$ |
| 17 | " | " | " | 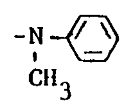 | " |

(Fortsetzung)

| Nr. | S | T | Ar | $R_1$ | $R_2$ |
|---|---|---|---|---|---|
| 18 | 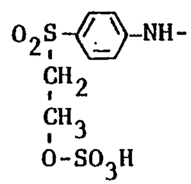 | 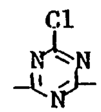 | 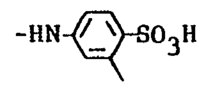 | $-N(CH_2CH_2OH)_2$ | 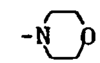 |
| 19 | " | 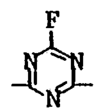 | " | " | " |
| 20 | 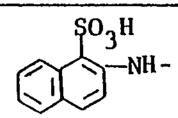 | " | " | " | " |
| 21 | 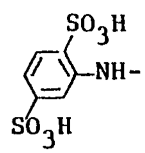 | 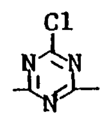 | " | " | 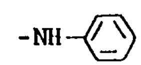 |
| 22 | " | " | " | " | 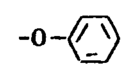 |
| 23 | $H_2N-$ | 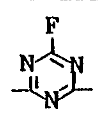 | 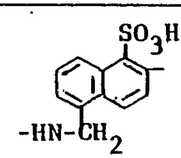 | 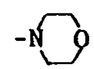 | -OH |

(Fortsetzung)

| Nr. | S | T | Ar | $R_1$ | $R_2$ |
|---|---|---|---|---|---|
| 24 | 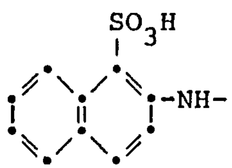 | 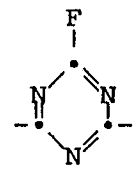 | 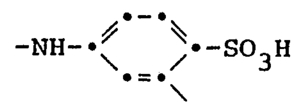 | —OH | 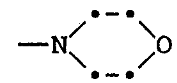 |
| 25 | 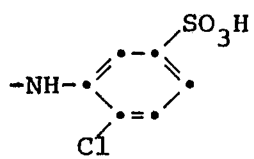 | " | " | " | " |
| 26 | 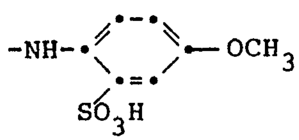 | " | " | " | " |
| 27 | 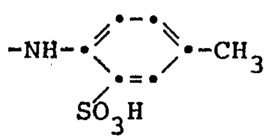 | " | " | " | " |
| 28 | 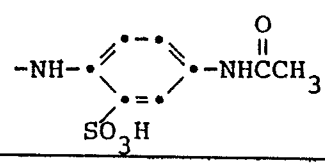 | " | " | " | " |

(Fortsetzung)

| Nr. | S | T | Ar | $R_1$ | $R_2$ |
|---|---|---|---|---|---|
| 29 | 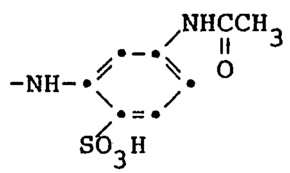 | 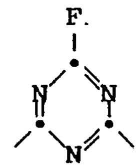 | 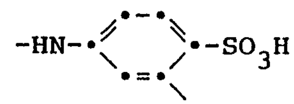 | —OH | 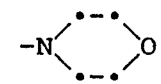 |
| 30 | 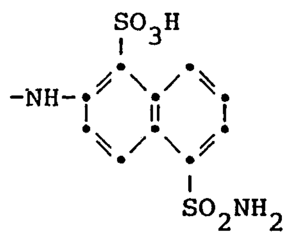 | " | " | " | " |
| 31 | 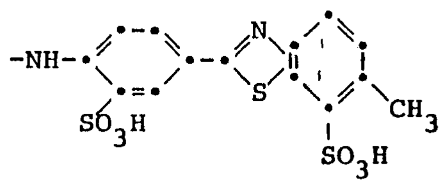 | " | " | " | " |
| 32 | $-OCH_3$ | 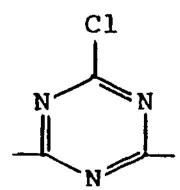 | " | " | " |
| 33 | $-OC_2H_5$ | " | " | " | " |

(Fortsetzung)

| Nr. | S | T | Ar | $R_1$ | $R_2$ |
|---|---|---|---|---|---|
| 34 | $-OCH(CH_3)_2$ | 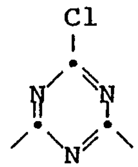 | 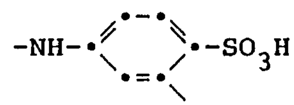 | —OH | 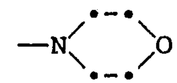 |
| 35 | $-OCH_2CH_2OCH_2CH_3$ | " | 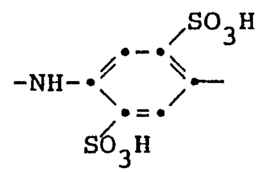 | " | " |
| 36 | 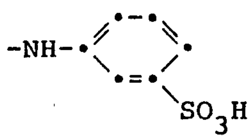 | " | 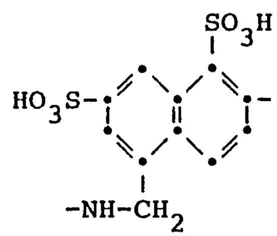 | " | $—N(CH_2CH_2OH)_2$ |
| 37 | 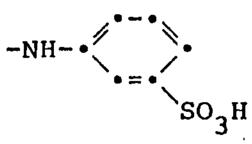 | 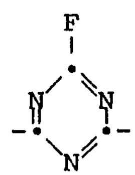 | " | " | " |

(Fortsetzung)

| Nr. | S | T | Ar | $R_1$ | $R_2$ |
|---|---|---|---|---|---|
| 38 | 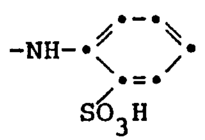 | 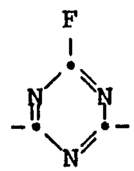 | 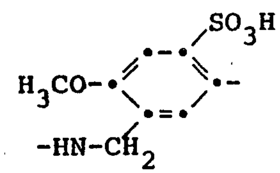 | —OH | $—N(CH_2CH_2OH)_2$ |
| 39 | 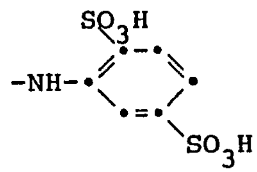 | " | 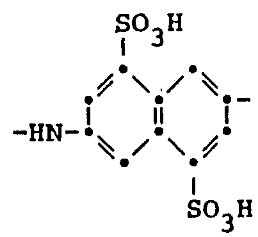 | $—NH_2$ | " |
| 40 | 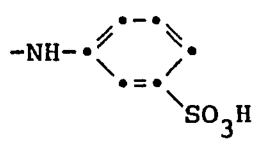 | " | 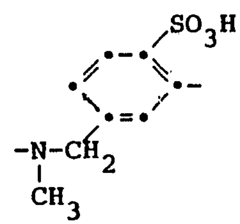 | " | " |

Beispiel 5

Zu einer Lösung von 69.8 Teilen des in Beispiel 1, No. I hergestellten Zwischenfarbstoffs werden unter gutem Rühren 9.6 Volumen-Teile Trigenortriazin bei 0 °C zugetropft. Durch gleichzeitige Zugabe von Natronlauge wird der pH auf 5.5 gehalten. Nach beendeter Kondensation werden 6.6 Volumen-Teile 2-Amino-äthanol zugestürzt, der pH wird durch weitere Natronlauge auf 7.5 gehalten, und so wird langsam auf Raumtemperatur eingewärmt. Ist die Kondensation fertig, wird der Farbstoff der Formel

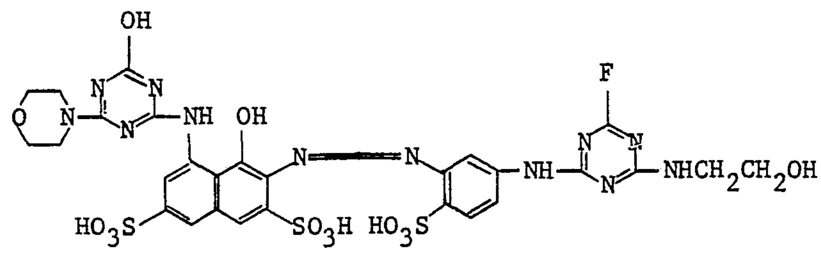

durch Zugabe von NaCl wie üblich isoliert. Er färbt Baumwolle in gut ätzbarer, brillantroter Nuance mit guter Echtheit.

Weitere, ebensogute Farbstoffe von gleicher Nuance werden erhalten, wenn man wie in Beispiel 5 vorgeht, jedoch statt Aethanolamin eines der unten genannten Amine in äquivalenter Menge einsetzt :

Ammoniak, Methylamin, Dimethylamin, Aethylamin, Diäthylamin, Diäthanolamin, Taurin, Methyltaurin, n-Butylamin, Anilin, Cyclohexylamin, N-Methylanilin, N-Aethylanilin, 2-Anilinoäthanol, o-Toluidin, m-Toluidin, p-Toluidin, m-Chloranilin, p-Chloranilin, o-Anisidin, p-Anisidin, p-Phenetidin, p-Aminobenzoesäure, Anilin-3-sulfosäure, Anilin-4-sulfosäure, 3-Amino-acetanilid, 4-Amino-acetanilid, 3-Amino-phenyloxamidsäure, 3-Aminophenylharnstoff, 4-Aminophenylharnstoff, Morpholin, 2-Amino-benzthiazol, 2-Amino-thiazol, Dehydrothio-p-toluidin-5-sulfonsäure.

Färbevorschrift I

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet.

Danach imprägniert man das Gewebe mit einer 20° warmen Lösung, die pro Liter 5 Gramm Natriumhydroxyd und 300 Gramm Natriumchlorid enthält, quetscht auf 75 % Gewichtszunahme ab, dämpft die Färbung während 30 Sekunden bei 100 bis 101°, spült, seift während einer Vierteilstunde in einer 0,3 %igen kochenden Lösung eines ionenfreien Waschmittels, spült und trocknet.

Färbevorschrift II

2 Teile des gemäss Beispiel 1 erhältlichen Farbstoffes werden in 100 Teilen Wasser gelöst.

Die Lösung gibt man zu 1 900 Teilen kaltem Wasser, fügt 60 Teile Natriumchlorid zu und geht mit 100 Teilen eines Baumwollgewebes in dieses Färbebad ein.

Man steigert die Temperatur auf 40°, wobei nach 30 Minuten 4 Vol.-Teile 30 %ige Natronlauge, 10 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3 %igen kochenden Lösung eines ionenfreien Waschmittels, spült und trocknet.

**Ansprüche**

1. Azofarbstoffe der Formel

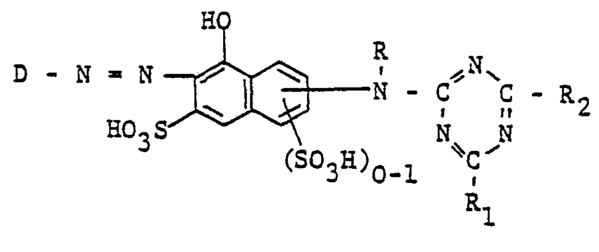

(1)

worin D der Rest einer aromatischen Diazokomponente, der weitersubstituiert sein kann, und selbst eine Azobrücke enthalten kann, und der eine Halogen-s-triazinylaminogruppe enthält, und R Wasserstoff oder

Alkyl mit 1 bis 4 Kohlenstoffatomen ist, und $R_1$ und $R_2$ unabhängig voneinander nichtreaktive Substituenten sind.

2. Azofarbstoffe gemäss Anspruch 1, der Formel

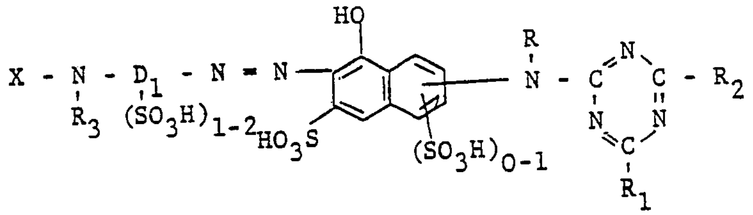

(2)

worin $D_1$ ein Benzol- oder Naphthalinrest, der weitersubstituiert sein kann, X eine Fluor- oder Chlor-s-triazinylgruppe, $R_3$ Wasserstoff oder Alkyl mit 1 bis 4 Kohlenstoffatomen, und R Wasserstoff oder Alkyl mit 1 bis 4 Kohlenstoffatomen ist, und $R_1$ und $R_2$ unabhängig voneinander nichtreaktive Substituenten sind.

3. Azofarbstoffe gemäss Anspruch 2, worin X eine Monofluor- oder Monochlor-s-triazinylgruppe, $R_3$ Wasserstoff oder Methyl und R Wasserstoff oder Methyl ist, und $R_1$ und $R_2$ unabhängig voneinander unsubstituierte oder substituierte Hydroxy- oder Aminogruppen sind.

4. Azofarbstoffe gemäss Anspruch 3 der Formel

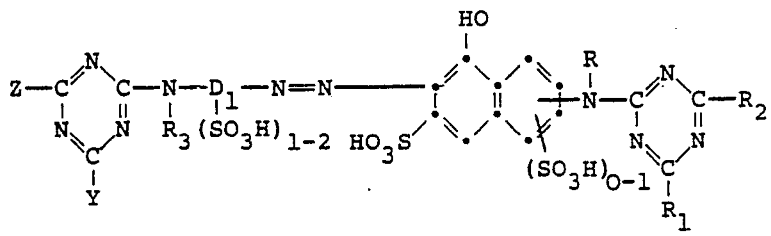

(3)

worin $D_1$ ein Sulfobenzolrest, ein Sulfobenzol-$CH_2$-Rest, der durch Methoxy substituiert sein kann, oder ein Sulfonaphthalin-$CH_2$-Rest, Y Fluor oder Chlor, Z Amino, $C_{1-4}$-Alkylamino oder N,N-Di-$C_{1-4}$-Alkylamino, worin die Alkyle durch Hydroxy oder Sulfo substituiert sein können, Cyclohexylamino, Phenylamino, das im Phenylkern durch Methyl, Methoxy, Aethoxy, Chlor, Carboxy, Sulfo, β-Sulfatoäthylsulfonyl, Acetylamino, Oxaloamino oder Ureido substituiert sein kann, Morpholino, Benzthiazolyl-2-amino, Thiazolyl-2-amino, 4-Methyl-5-sulfobenzthiazolyl-2-phenylamino, N-$C_{1-2}$-Alkyl-N-phenylamino, das im Alkyl durch Hydroxy substituiert sein kann, $C_{1-4}$-Alkoxy oder $C_{1-2}$-Alkoxy-$C_{1-2}$-alkoxy, $R_3$ Wasserstoff oder Methyl, R Wasserstoff oder Methyl, und $R_1$ und $R_2$ unabhängig voneinander Hydroxy, Methoxy, Isopropyloxy, Phenoxy, Amino, β-Hydroxyäthylamino, N,N-Di-β-hydroxyäthylamino, β-Sulfoäthylamino, β-Carboxyäthylamino, N-Methyl-N-β-sulfoäthylamino, Phenylamino, Sulfophenylamino, Carboxyphenylamino, Sulfo-carboxyphenylamino, N-Methyl-N-phenylamino oder Morpholino ist.

5. Azofarbstoffe gemäss Anspruch 4 der Formel

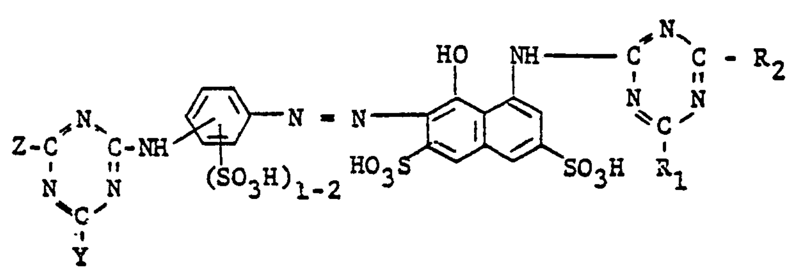

(4)

worin Y, Z, $R_1$ und $R_2$ die in Anspruch 4 angegebenen Bedeutungen haben.

6. Azofarbstoffe gemäss Anspruch 5 der Formel

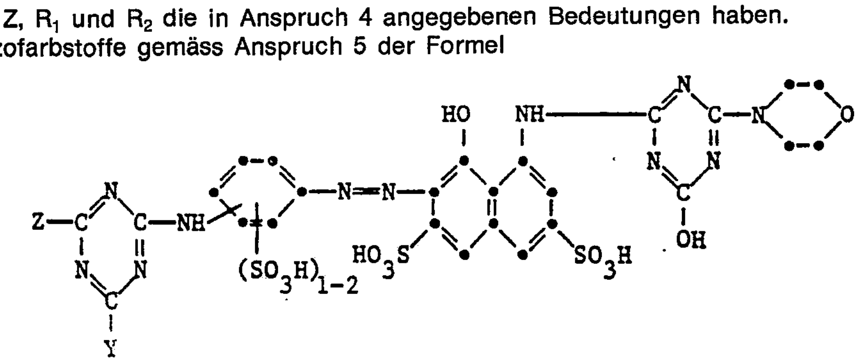

(5)

worin Y und Z die in Anspruch 5 angegebenen Bedeutungen haben.

7. Azofarbstoffe gemäss Anspruch 6, worin Y Fluor ist.

8. Der Azofarbstoff gemäss Anspruch 7 der Formel

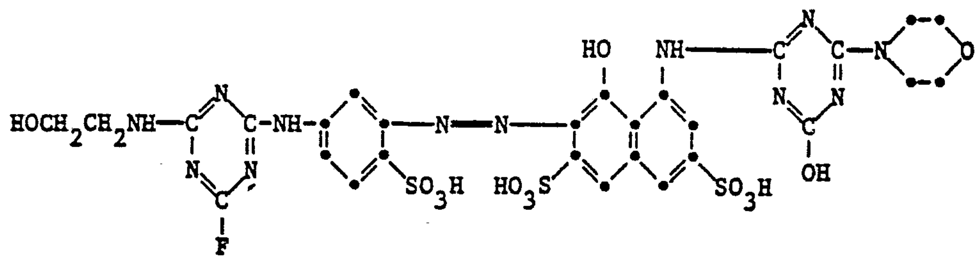

(6)

9. Der Azofarbstoff gemäss Anspruch 7 der Formel

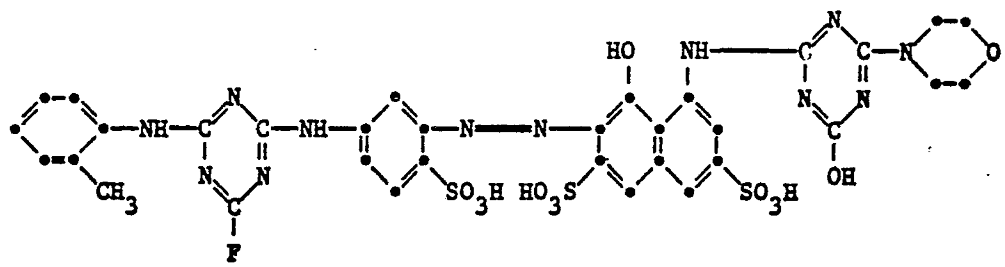

(6a)

10. Verfahren zur Herstellung von Azofarbstoffen gemäss Anspruch 1, dadurch gekennzeichnet, dass man eine diazotierte Diazokomponente der Formel

$$D—NH_2 \quad (7)$$

eine Kupplungskomponente der Formel

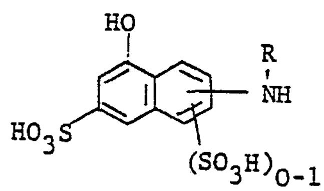

(8)

ein Trihalogen-s-triazin der Formel

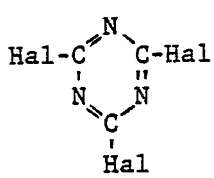

(9)

und Verbindungen der Formeln

$$R_1—H \quad (10)$$

und

$$R_2—H \quad (11)$$

miteinander kuppelt und kondensiert, und in den Rest D, der noch eine acylierbare Aminogruppe enthalten muss, einen Halogen-s-triazinrest einführt.

11. Verwendung der Azofarbstoffe gemäss den Ansprüche 1 bis 9 bzw. der gemäss Anspruch 10 erhaltenen Azofarbstoffe zum Färben und Bedrucken.

12. Verwendung gemäss Anspruch 11 zum Färben von Cellulosefasern.

13. Das gemäss den Ansprüchen 11 und 12 erhaltene gefärbte und bedruckte Textilmaterial.

**Claims**

1. An azo dye of the formula

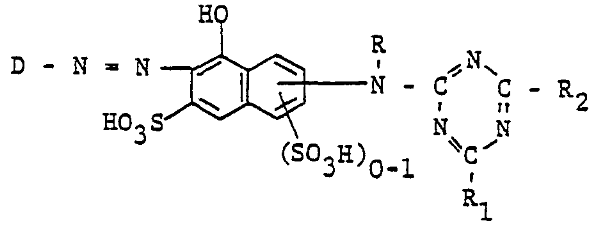

(1)

in which D is the radical of an aromatic diazo component, which can contain carry additional substituents and can itself contain an azo bridge, and which contains a halo-s-triazinylamino group, R is hydrogen or alkyl having 1 to 4 carbon atoms and $R_1$ and $R_2$ are each, independently unreactive substituents.

2. An azo dye according to claim 1, of the formula

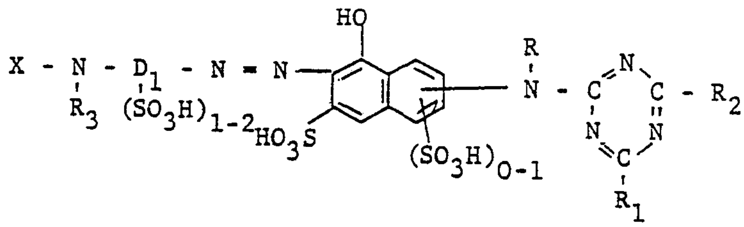

(2)

in which $D_1$ is a benzene or naphthalene radical which can be further substituted, X is a fluoro-s-triazinyl or chloro-s-triazinyl group, $R_3$ is hydrogen or alkyl having 1 to 4 carbon atoms, R is hydrogen or alkyl having 1 to 4 carbon atoms and $R_1$ and $R_2$ are each, independently unreactive substituents.

3. An azo dye according to claim 2, in which X is a monofluoro-s-triazinyl or monochloro-s-triazinyl group, $R_3$ is hydrogen or methyl, R is hydrogen or methyl, and $R_1$ and $R_2$ are each independently unsubstituted or substituted hydroxyl or amino groups.

4. An azo dye according to claim 3, of the formula

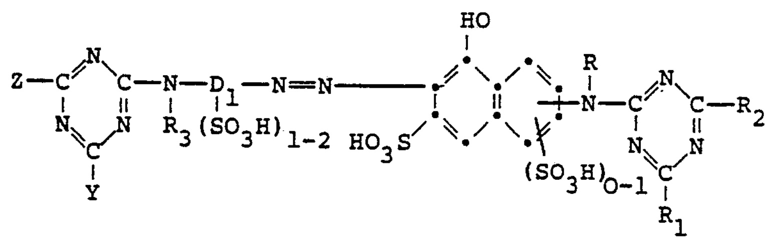

(3)

in which $D_1$ is a sulfobenzene radical, a sulfobenzene —$CH_2$— radical which can be substituted by methoxy, or a sulfonaphthalene —$CH_2$— radical, Y is fluorine or chlorine, Z is amino, $C_{1-4}$ alkylamino or N,N-di-$C_{1-4}$ alkylamino, in which the alkyl moities can be substituted by hydroxyl or sulfo, or is cyclohexylamino, or is phenylamino which can be substituted in the phenyl nucleus by methyl, methoxy, ethoxy, chlorine, carboxyl, sulfo, β-sulfato-ethylsulfonyl, acetylamino, oxaloamino or ureido, or is morpholino, benzthiazolyl-2-amino, thiazolyl-2-amino or 4-methyl-5-sulfobenzthiazolyl-2-phenylamino, or is N-$C_{1-2}$ alkyl-N-phenylamino, in which the alkyl moiety can be substituted by hydroxyl, or is $C_{1-4}$ alkoxy or $C_{1-2}$ alkoxy-$C_{1-2}$ alkoxy, $R_3$ is hydrogen or methyl, R is hydrogen or methyl, and $R_1$ and $R_2$ are each independently hydroxyl, methoxy, isopropoxy, phenoxy, amino, β-hydroxy-ethylamino, N-N-di-β-hydroxyethylamino, β-sulfoethylamino, β-carboxyethylamino, N-methyl-N-β-sulfoethylamino, phenylamino, sulfophenylamino, carboxyphenylamino, sulfo-carboxyphenylamino, N-methyl-N-phenylamino or morpholino.

5. An azo dye according to claim 4, of the formula

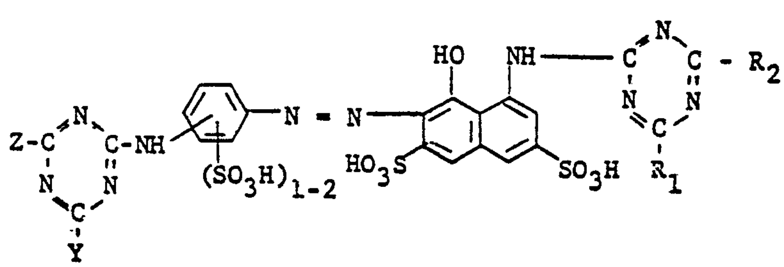

(4)

in which Y, Z, $R_1$ and $R_2$ are as defined in claim 4.

6. An azo dye according to claim 5, of the formula

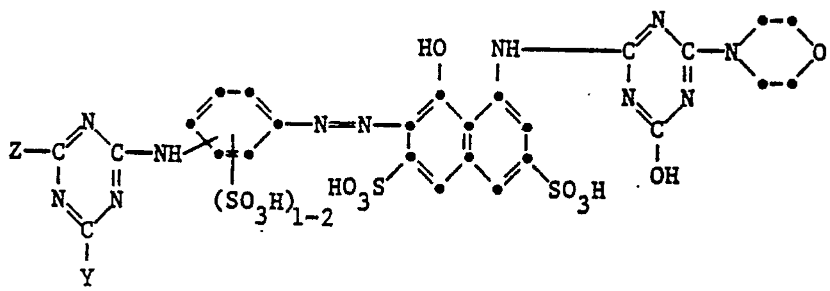

(5)

in which Y and Z are as defined in claim 5.

7. An azo dye according to claim 6, in which Y is fluorine.

8. The azo dye according to claim 7, of the formula

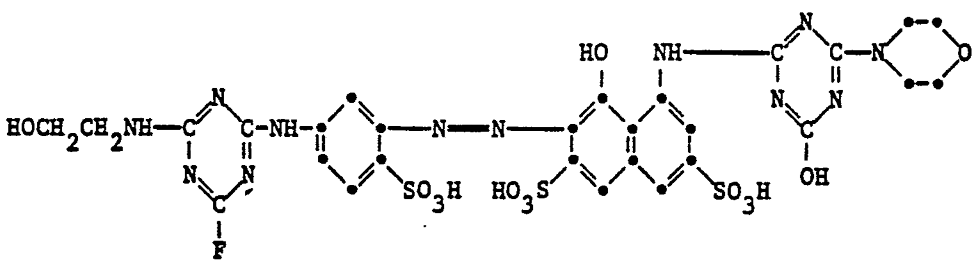

(6)

9. The azo dye according to claim 7, of the formula

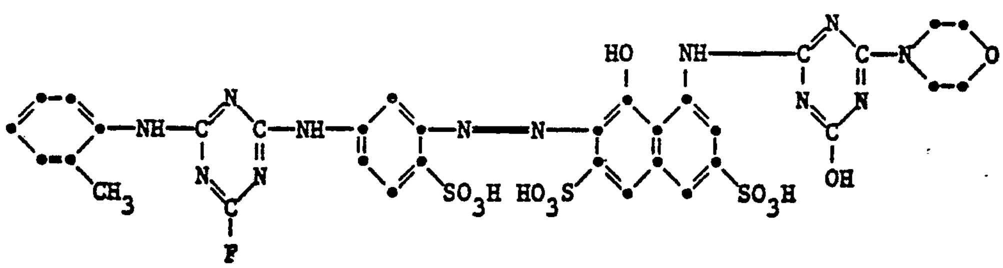

(6a)

10. A process for the preparation of an azo dye according to claim 1, which comprises coupling and condensing a diazotised diazo component of the formula

$$D—NH_2 \tag{7}$$

a coupling component of the formula

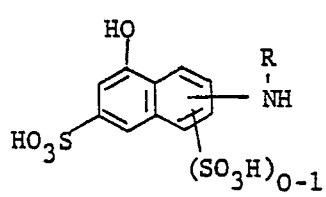

(8)

a trihalo-s-triazine of the formula

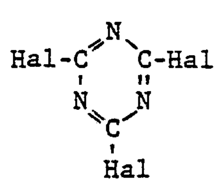

(9)

and compounds of the formulae

$$R_1—H \qquad (10)$$

and

$$R_2—H \qquad (11)$$

with one another, and introducing a halo-s-triazinyl radical into the radical D, which must additionally contain an acylatable amino group.

11. Use of an azo dye according to any of claims 1 to 9, or of an azo dye obtained according to claim 10, for dyeing and printing.

12. Use according to claim 11 for dyeing of cellulose fibres.

13. The dyed and printed textile material obtained according to claims 11 and 12.

**Revendications**

1. Colorants azoïques de formule

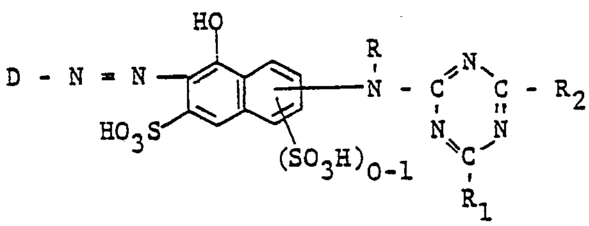

(1)

dans laquelle D est le reste d'un diazoïque aromatique, qui peut être encore substitué, et peut même contenir un pont azoïque, et qui contient un groupe halogéno-s-triazinylamino, et R est de l'hydrogène ou un reste alcoyle ayant 1 à 4 atomes de carbone, et $R_1$ et $R_2$ sont, indépendamment l'un de l'autre, des substituants non réactifs.

2. Colorants azoïques selon la revendication 1, de formule

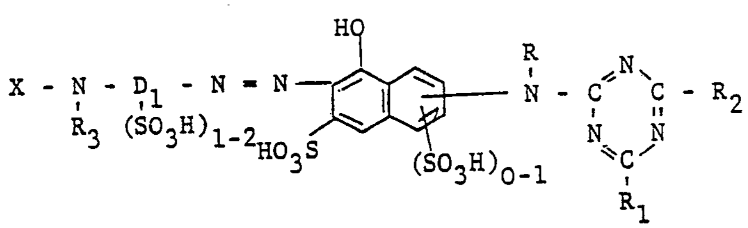

(2)

dans laquelle $D_1$ est un reste benzénique ou naphtalénique qui peut être encore substitué ; X est un groupe fluoro- ou chloro-s-triazinyle ; $R_3$ est de l'hydrogène ou un reste alcoyle ayant 1 à 4 atomes de carbone, et R est de l'hydrogène ou un reste alcoyle ayant 1 à 4 atomes de carbone, et $R_1$ et $R_2$ sont, indépendamment l'un de l'autre, des substituants non réactifs.

3. Colorants azoïques selon la revendication 2, dans lesquels X est un groupe monofluoro- ou monochloro-s-triazinyle ; $R_3$ est de l'hydrogène ou le reste méthyle, et R est de l'hydrogène ou le reste méthyle, et $R_1$ et $R_2$ sont, indépendamment l'un de l'autre, des groupes hydroxyle ou amino non substitués ou substitués.

4. Colorants azoïques selon la revendication 3, de formule

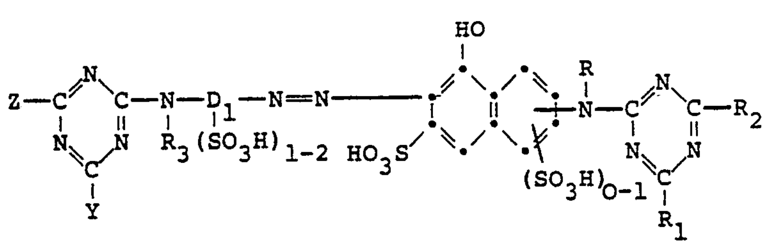

(3)

dans laquelle $D_1$ est un reste sulfobenzénique, un reste sulfobenzène $—CH_2$ qui peut être substitué par le

radical méthoxy, ou un reste sulfonaphtalène —$CH_2$ ; Y est le fluor ou le chlore ; Z un reste amino, alcoyl-$C_{1-4}$-amino ou N,N-di-alcoyl-$C_{1-4}$-amino, où les restes alcoyle peuvent être substitués par un groupe hydroxyle ou sulfo, un reste cyclohexylamino, phénylamino qui peut être substitué dans le noyau phényle par les radicaux méthyle, méthoxy, éthoxy, chloro, carboxyle, sulfo, β-sulfatoéthylsulfonyle, acétylamino, oxaloamino ou uréido ; un reste morpholino, benzothiazolyl-2-amino, thiazolyl-2-amino, 4-méthyl-5-sulfobenzothiazolyl-2-phénylamino, N-alcoyl-$C_{1-2}$-N-phénylamino, qui peut être substitué dans le reste alcoyle par un groupe hydroxyle ; un reste alcoxy-$C_{1-4}$ ou alcoxy-$C_{1-2}$-alcoxy-$C_{1-2}$ ; $R_3$ est de l'hydrogène ou le reste méthyle ; R est de l'hydrogène ou le reste méthyle, et $R_1$ et $R_2$ sont, indépendamment l'un de l'autre, des groupes hydroxyle, méthoxy, isopropyloxy, phénoxy, amino, β-hydroxyéthylamino, N-N-di-β-hydroxyéthylamino, β-sulfoéthylamino, β-carboxyéthylamino, N-méthyl-N-β-sulfoéthylamino, phénylamino, sulfophénylamino, carboxyphénylamino, sulfo-carboxyphénylamino, N-méthyl-N-phénylamino ou morpholino.

5. Colorants azoïques selon la revendication 4, de formule

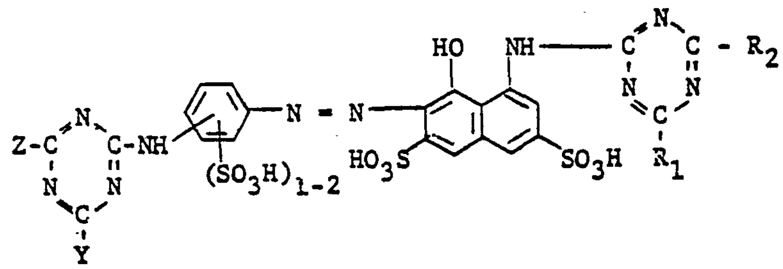

(4)

dans laquelle Y, Z, $R_1$ et $R_2$ ont les significations indiquées dans la revendication 4.

6. Colorants azoïques selon la revendication 5, de formule

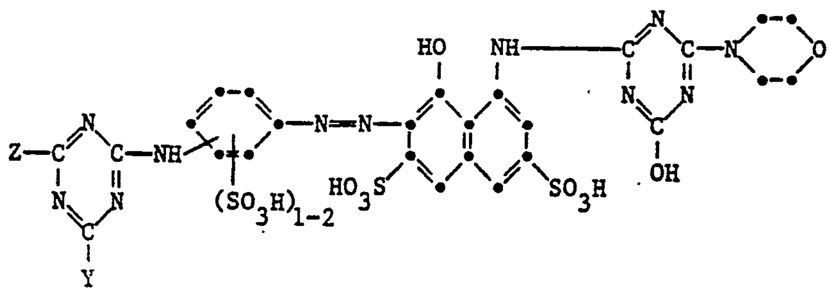

(5)

dans laquelle Y et Z ont les significations indiquées dans la revendication 5.

7. Colorants azoïques selon la revendication 6, dans lesquels Y est le fluor.

8. Le colorant azoïque selon la revendication 7, de formule

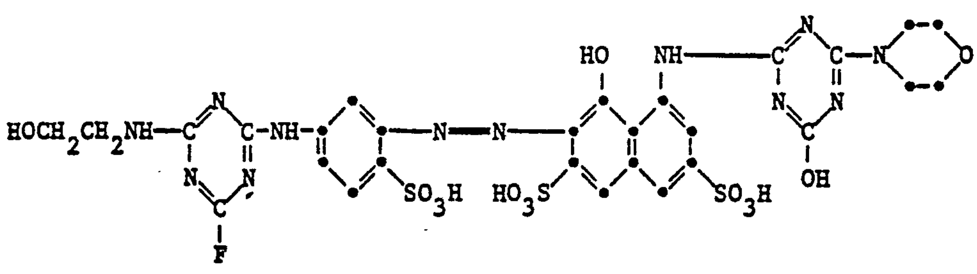

(6)

9. Le colorant azoïque selon la revendication 7, de formule

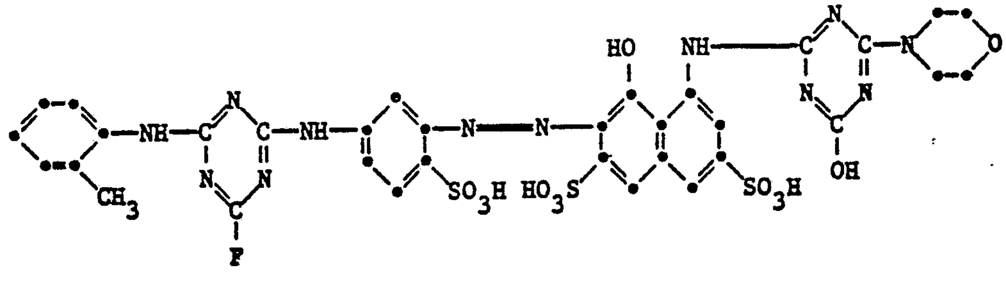

(6a)

10. Procédé de préparation des colorants azoïques selon la revendication 1, caractérisé par le fait que l'on copule et condense les uns avec les autres un diazoïque diazoté de formule

$$D—NH_2 \quad (7)$$

un composant de copulation de formule :

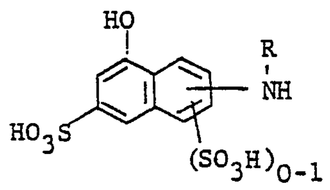

(8)

une trihalogéno-s-triazine de formule

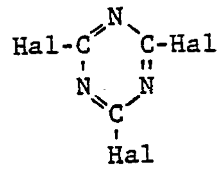

(9)

et des composés de formules

$$R_1—H \quad (10)$$

et

$$R_2—H \quad (11)$$

et qu'on introduit un reste halogéno-s-triazine dans le reste D qui doit contenir encore un groupe amino acylable.

11. Utilisation des colorants azoïques selon les revendications 1 à 9 ou dès colorants azoïques obtenus selon la revendication 10 pour la teinture et l'impression.

12. Utilisation selon la revendication 11, pour teindre des fibres cellulosiques.

13. La matière textile teinte et imprimée obtenue selon les revendications 11 et 12.